# EUROPEAN PATENT SPECIFICATION

(11) **EP 3 784 941 B1**
(45) Date of publication and mention of the grant of the patent: **08.11.2023**
(21) Application number: 19712590.9
(22) Date of filing: 26.03.2019
(51) Int. Cl.: F16L 5/06

(54) **SEALING JOINT FOR PASSING THROUGH WALLS AND COMBINATION OF THE JOINT AND OF A DUCT**
DICHTUNGSFUGE ZUR DURCHFÜHRUNG DURCH WÄNDE UND KOMBINATION DER FUGE UND EINES KANALS
JOINT D'ÉTANCHÉITÉ POUR PASSAGE À TRAVERS DES PAROIS ET COMBINAISON DU JOINT D'ÉTANCHÉITÉ ET D'UN CONDUIT

(30) Priority: 26.04.2018 IT 201800004866
(43) Date of publication of application: 03.03.2021
(73) Proprietor: RUBINETTERIE BRESCIANE BONOMI SPA, 25064 Gussago (BS) (IT)
(72) Inventor: BONOMI, Aldo, 25065 LUMEZZANE (IT); BONOMI, Carlo, 25065 LUMEZZANE (IT)
(74) Representative: Modiano, Micaela Nadia
(86) International application number: PCT/EP2019/057508
(87) International publication number: WO 2019/206547

(56) References cited:
- DE-U1- 8 012 178
- FR-A- 720 741
- FR-A1- 2 567 230
- FR-A5- 2 070 437

## Description

The present invention relates to a sealing joint for passing through walls, in particular for shipbuilding applications, and a combination of such joint and a duct.

These joints are used when a duct passes through a wall, for example bulkhead (vertical) or a deck (horizontal) of a vessel.

The term "ducts" here is used to indicate both actual pipes (for example used for conveying fluids) and bundles of electrical cables or wires.

In the shipbuilding field, whenever the continuity of a wall is interrupted in order to permit the passage of a duct between adjacent spaces, it is necessary to ensure that the perforated passage is sealed so as to maintain the efficacy of compartmenting for the purposes of the buoyancy of the vessel; these requirements are in any case also prescribed in special regulations which however will not be discussed further here.

In particular, the principal requirements that must be met are:
- watertight seal of the joining region under conditions of normal use: the joining region must ensure the watertight seal (to be evaluated according to the criterion defined by IMO Resolution A.265 (VIII)). Substantially the seal must be not lower than the maximum foreseeable head for a floating vessel; usually maintenance of a watertight seal in the presence of a pressure of 3.3 bar is considered acceptable for the vast majority of existing vessels. The above mentioned watertight seal should be understood to mean between the device/duct and the corresponding deck/bulkhead, i.e. between contiguous compartments;
- fire resistance: the European Marine Equipment Directive (MED) 2014/90/EU specifies tests to be carried out that subject the joining region to an extremely severe heat stress condition (up to 970°C) for the duration of one hour. In brief, the joining region, at the end of the test, which has a variable duration according to the class of certification, must maintain structural integrity, and the region of passing through must not exceed the temperature of 180°C;
- watertight seal after the fire resistance test: "IMO Resolution MSC.429(98) / ANNEX 12 / Regulation 13.2.3 - adopted on 9 June 2017" specifies that the joining region must maintain a certain degree of watertight seal (or, subordinately, is made so as to minimize leaks) after having undergone the fire test described above.

As can be seen from the above regulations, the criteria that must be met when a duct needs to pass through a perforated passage in a wall (bulkhead or deck) are rather strict in the case of watercraft.

Currently, when there are passages of ducts through a wall, a number of solutions are usually available, which however have certain limitations which are discussed below.

Conventional duct passages consist of pipe couplings which are welded directly to the wall; while on the one hand this solution makes it possible to easily meet the above indicated requirements, it entails however long installation times, qualified technicians, special equipment and all the possible drawbacks caused by the welding.

In a more recent solution the sealing joints are made of polymeric materials, so as to avoid welding. Although easy to install and generally functional, these conventional polymeric joints are not usually capable of maintaining the watertight seal after the fire test.

In another conventional solution, the joint is made using fireproof foams and resins applied in the region of passing through: this solution too is usually not capable of ensuring the watertight seal after the fire test, and it furthermore has a high cost for the foams and resins and is difficult to install. Another sealing joint according to the state of the art is shown in document DE8012178U1.

The aim of the present invention consists in providing a sealing joint for passing through walls that solves the above technical problem, eliminates the drawbacks and overcomes the limitations of the known art, by making a joint available at a low cost, is easy to install and meets the requirements for watertight seal, fire resistance, and watertight seal after the fire test.

Within this aim, an object of the invention consists in providing a joint that is capable of offering the widest guarantees of reliability and safety in use.

Another object of the invention consists in providing a joint that is relatively easy to implement and economically competitive when compared to the known art.

This aim and these and other objects which will become better apparent hereinafter are achieved by a sealing joint for passing through walls and by a combination of a duct and such a joint, in which the joint comprises:
a tubular body which in turn comprises a threaded portion and an annular flange, the tubular body comprising two open mouths, which are open onto a central channel, and being configured to be coupled to at least one duct;
a threaded ring, which is configured to be engaged by screw coupling on said threaded portion;
the annular flange and the threaded ring each comprising a respective annular sealing element;
the annular sealing elements being arranged on end faces of the annular flange and of the threaded ring which, in the condition in which the joint is assembled, are directed toward a wall which is passed through by the duct and is arranged between the annular flange and the threaded ring.

Further characteristics and advantages of the invention will become better apparent from the description of two preferred, but not exclusive, embodiments of a joint and a joint/duct combination, which are illustrated by way of non-limiting example with the aid of the accompanying drawings wherein:

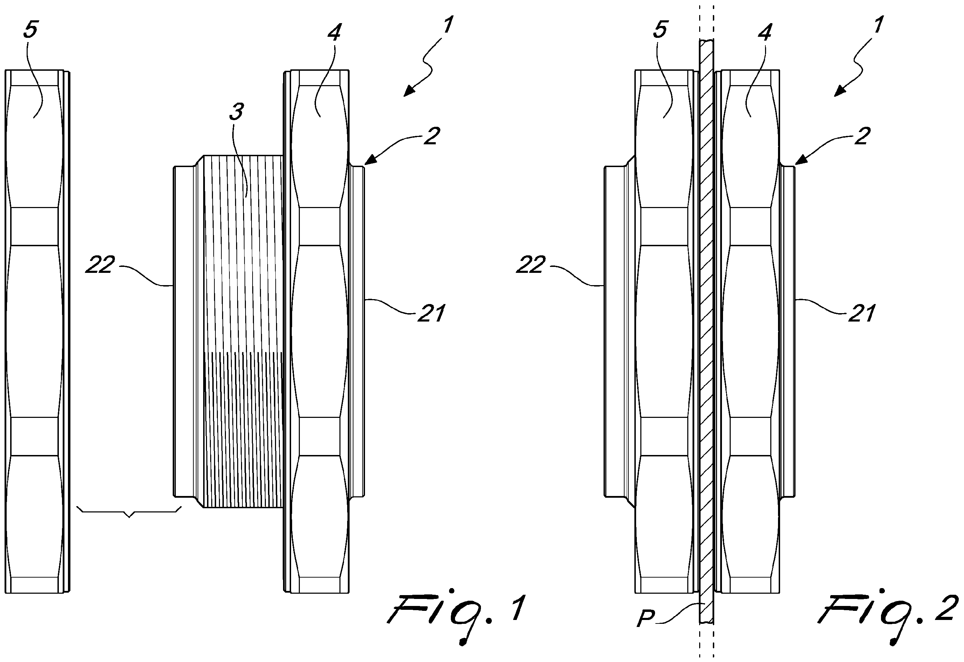

Figure 1 is a side view of the joint according to the invention in the disassembled condition;
Figure 2 is a side view of the joint in Figure 1 in the assembled condition and mounted on a wall;

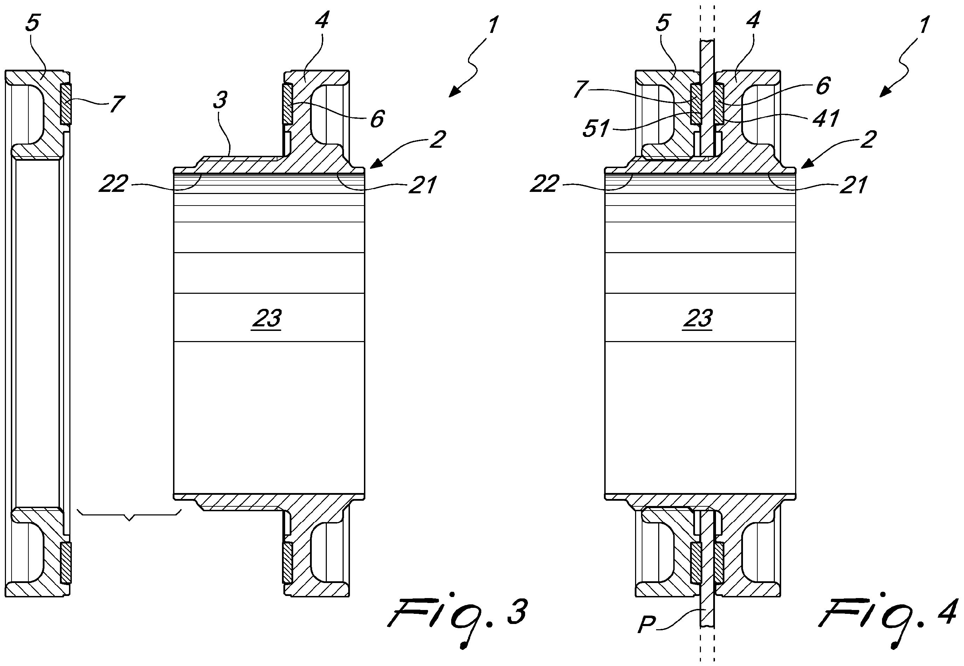

Figure 3 is a cross-sectional side view of the joint in the previous figures in the disassembled condition;
Figure 4 is a cross-sectional side view of the joint in the previous figures in the assembled condition and mounted on a wall;
Figures 5 and 6 are respectively a side view and a cross-sectional side view of a first combination of a joint according to the previous figures and a duct, in the mounted condition;
Figures 7 and 8 are respectively a side view and a cross-sectional side view of a second combination of a joint according to the previous figures and two ducts, in the mounted condition.

With reference to the figures, the joint, generally designated by the reference numeral 1, comprises a tubular body 2 and a threaded ring 5.

The tubular body 2 comprises two opposing openings 21, 22 which are open onto a central channel 23 of the tubular body 2.

In mounting, the tubular body 2 passes through the wall (e.g. a bulkhead or a deck, in the shipbuilding sector) until it protrudes from both of the opposite faces of the wall.

The tubular body 2 is configured to be coupled to at least one duct, preferably to a single duct C or to two ducts C1, C2, as will be better explained below.

The tubular body 2 also comprises a threaded portion 3 and an annular flange 4.

Preferably the annular flange 4 is arranged in a position proximate to an open mouth 21 and therefore at the corresponding terminal end of the body 2.

The annular flange 4 is preferably provided with an engagement shaping for a spanner or a tool, for example the annular flange 4 is provided with a polygonal shaping in order to be engaged by a polygonal spanner of correspondingly complementary shape.

The threaded ring 5 is configured to be engaged by screwing on the threaded portion 3, in the manner of a nut; preferably, entirely similarly to the annular flange 4, the threaded ring 5 is also provided with an engagement shaping for a spanner or a tool, for example it is provided with a polygonal shaping in order to be engaged by a polygonal spanner of correspondingly complementary shape.

In mounting on a wall P, a hole provided on the latter is passed through, at least partially, by the threaded portion 3 which protrudes for a certain length from the other side of the wall with respect to the side facing toward the flange 4, so as to permit the screw mounting of the ring 5 on the threaded part; by tightening the ring 5 the joint 1 is therefore robustly affixed to the wall P.

In order to meet the requirements required of the joint referred to above, the annular flange 4 and the threaded ring 5 each comprise a respective annular sealing element 6, 7.

The annular sealing elements 6, 7 are arranged on respective end faces of the annular flange 4 and of the threaded ring 5 which, in the condition in which the joint 1 is mounted on the wall P, are directed toward the latter, which in turn is arranged between the annular flange 4 and the threaded ring 5 and passed through by the tubular body 2.

In order to obtain simultaneously a good watertight seal and a good resistance to fire, the annular sealing elements 6, 7 are made of carbon-graphite. In substance, the annular sealing elements 6, 7 are provided as multilayer gaskets, each one made up of sheets of graphite with one or two layers of steel (for example AISI 316L) arranged between them.

Also for the same reason, the tubular body 2 and the threaded ring 5 are preferably made of austenitic stainless steel.

Preferably the tubular body 2 and the ring 5 are monolithic, so as to not present openings or connecting regions which could compromise the watertight seal or require further gaskets or contrivances.

Descending into more detail, in the preferred and illustrated form, the annular flange 4 and the threaded ring 5 each comprise a respective annular seat 41, 51 for accommodating the respective annular sealing element 6, 7.

The annular seat 41, 51 and the annular sealing element 6, 7 are configured in such a way that, once accommodated in the seat 41, 51, the respective sealing element 6, 7 protrudes outward; in this manner, during the installation, the sealing element 6, 7 comes into contact with the wall P, deforming under the action of tightening the ring and/or the flange and thus ensuring the watertight seal against the wall P.

The combination between the joint 1 just described and a duct, for example a metallic duct for conveying a fluid in a watercraft, can be provided mainly in two ways.

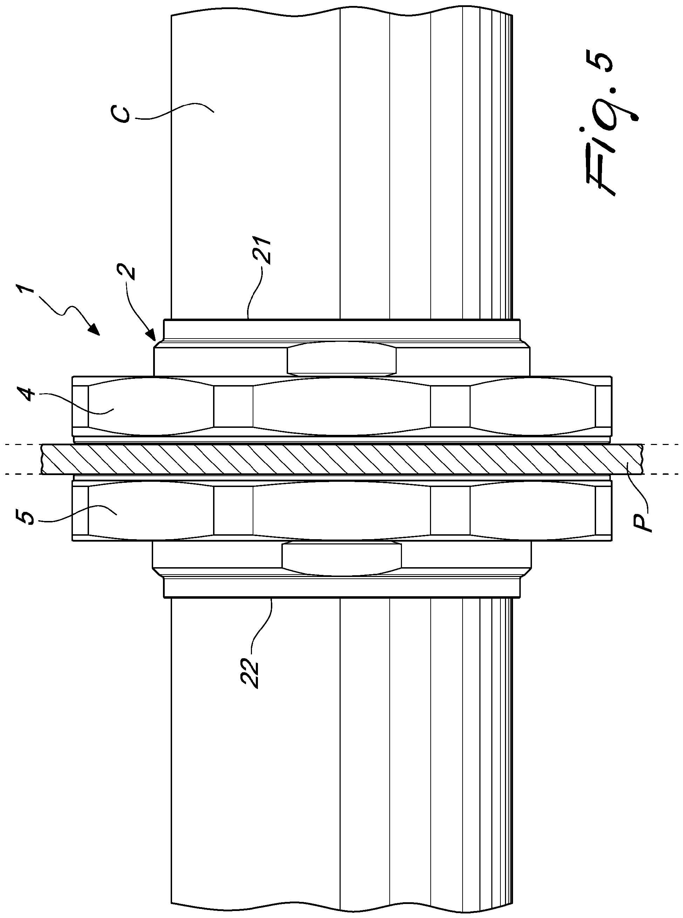

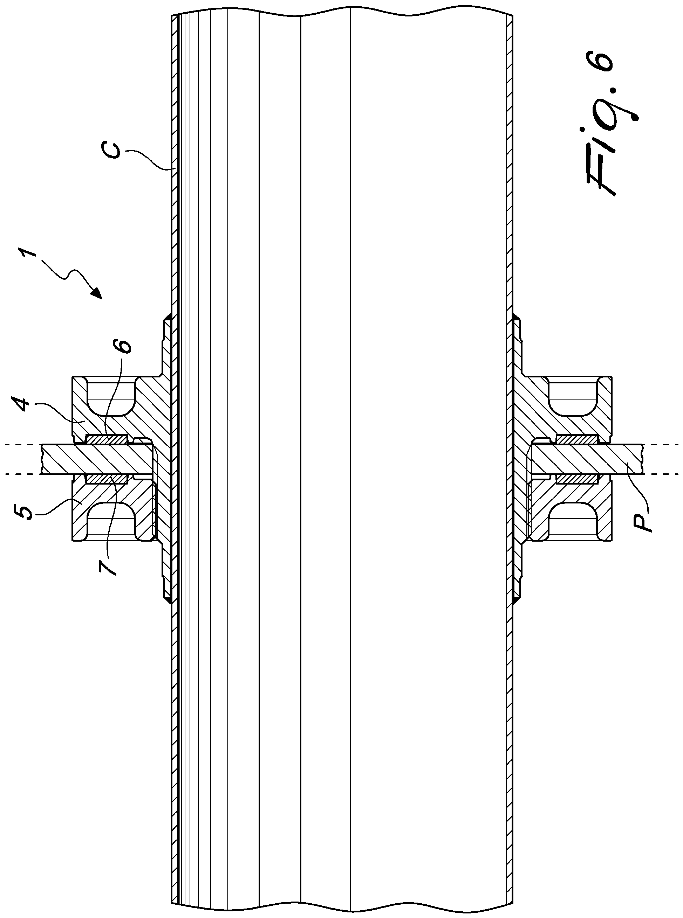

In a first embodiment shown in Figures 5 and 6, the duct C passes uninterrupted through the central channel 23: in other words the duct C is not interrupted at the joint, but passes through it.

The duct C is coupled to the tubular body 2 substantially at the open mouths 21, 22, preferably by way of welding. A particularly appreciable advantage of this embodiment is that of not interrupting the continuity of the duct C, which therefore maintains its original characteristics of safety, strength and watertight seal.

Preferably the outside diameter of the duct C will be approximately equal to, at the most slightly smaller than, the inside diameter of the central channel 23: in this manner a more precise coupling is obtained.

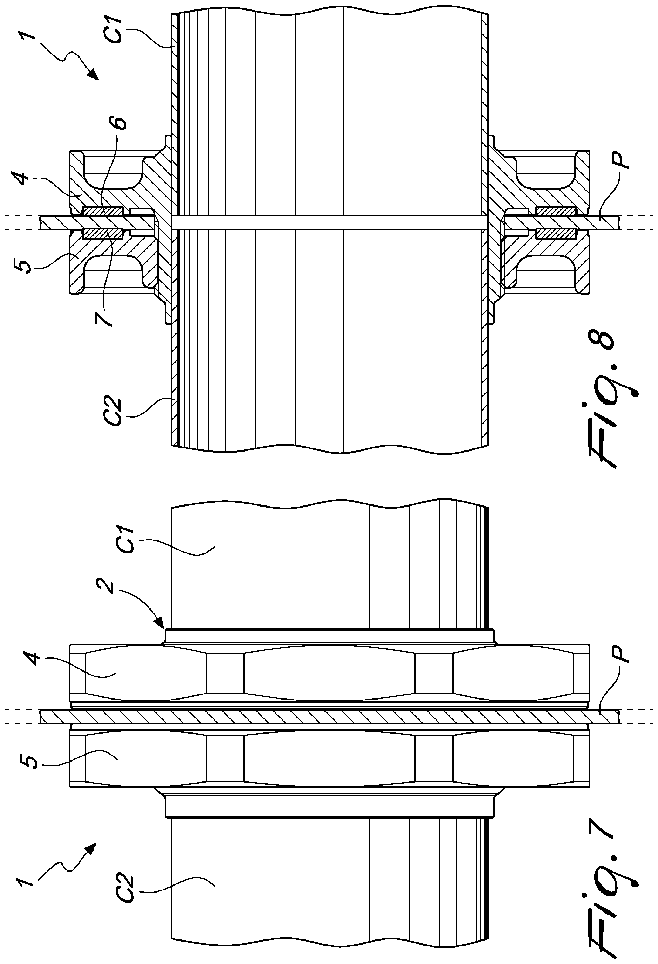

According to an alternative embodiment shown in Figures 7 and 8, on the other hand, the joint is connected to two ducts C1, C2, each of which is coupled to a respective mouth of the tubular body 2.

The ducts C1 and C2 can continue inside the central channel 23 for a certain length, up until they join inside the central channel 23, or they can be interrupted immediately after the openings 21, 22, according to requirements. Differently from the first embodiment described above, in this case the joint 1 also performs an operational function in addition to sealing, in that the walls of the channel 23 of the body 2 come into contact with the fluid conveyed by the ducts C1 and C2 and therefore become an integral part of its conveyance line.

In this embodiment the ducts C1, C2 are coupled to the body 2 substantially at the respective openings thereof by way of welding.

In practice it has been found that the sealing joint, according to the present invention, achieves the intended aim and objects in that it makes it possible to have a joint available that is at the same time simple to install, low cost, robust and capable of ensuring the watertight seal under normal conditions and after the fire test, and capable of surviving, among other things, high heat stresses.

The joint, thus conceived, is susceptible of numerous modifications and variations, all of which are within the scope of the appended claims.

For example, although it is evident from the non-limiting examples given above that the joint 1 presents major advantages if used in the nautical field, the possibility is not ruled out of using it in different technical sectors, such as for example the industrial, construction or residential sector, whenever there is a duct that needs to pass through a wall (vertical or horizontal) with the need to keep the passage sealed.

And with regard to the duct, it is clear that the invention just described can be applied both when the duct is a pipe for conveying fluids (liquids or gases), and also when the duct is intended to carry different construction elements, such as for example electrical cables or data transmission wires or the like.

Also, for example, the coupling between the tubular body and the ring could occur, in an entirely equivalent manner, by way of threaded pins instead of by way of a threaded ring that is screwed onto the body which is also provided with a threading.

The coupling by way of threaded pins should therefore be understood as an equivalent technique to the solution with threaded ring described, illustrated and claimed.

Moreover, all the details may be substituted by other, technically equivalent elements.

Thus, for example, the tubular body 2 and the ring 5 can be coupled to each other by way of threaded pins.

In practice the materials employed, provided they are compatible with the specific use, and the contingent dimensions and shapes, may be any according to requirements.

The disclosures in Italian Patent Application No. 102018000004866 from which this application claims priority is referred to.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A sealing joint (1) for passing through walls (P), which comprises:
a tubular body (2) which comprises a threaded portion (3) and an annular flange (4), the tubular body (2) comprising two open mouths (21, 22), which are open onto a central channel (23), and being configured to be coupled to at least one duct (C; C1, C2);
a threaded ring (5), which is configured to be engaged by screw coupling on said threaded portion (3);
the annular flange (4) and the threaded ring (5) each comprising a respective annular sealing element (6, 7);
the annular sealing elements (6, 7) being arranged on end faces of the annular flange (4) and of the threaded ring (5) which, in the condition in which the joint is assembled, are directed toward a wall (P) which is arranged between the annular flange (4) and the threaded ring (5) and is passed through by the duct (C; C1, C2), wherein the annular sealing elements (6, 7) are made of carbon-graphite, said annular sealing elements being thus provided as multilayer gaskets, each one made up of sheets of graphite with one or two layers of steel arranged between them.

2. The joint (1) according to claim 1 , wherein the tubular body (2) and the threaded ring (5) are made of austenitic stainless steel.

3. The joint (1) according to one or more of the preceding claims, wherein the annular flange (4) and the threaded ring (5) each comprise a respective annular seat (41, 51) for accommodating the respective annular sealing element (6, 7).

4. A combination of a joint (1) according to one or more of the preceding claims and of a duct (C), wherein the duct (C) passes without discontinuities through said central channel (23), the duct (C) being coupled to the tubular body (2) substantially at said open mouths (21, 22).

5. The combination according to the preceding claim, wherein the duct (C) is coupled to the tubular body (2) by welding.

6. The combination of a joint (1) according to one or more of claims 1 to 3 and of two ducts (C1, C2), wherein said ducts (C1, C2) are each coupled to a respective mouth of the tubular body (2).

7. The combination according to the preceding claim, wherein said ducts (C1, C2) are coupled to the respective mouths of the tubular body (2) by welding.

## Patentansprüche

1. Eine Dichtungsfuge (1) zur Durchführung durch Wände (P), die Folgendes umfasst:
einen röhrenförmigen Körper (2), der einen Gewindeabschnitt (3) und einen ringförmigen Flansch (4) umfasst, wobei der röhrenförmige Körper (2) zwei offene Anschlüsse (21, 22) umfasst, die sich zu einem zentralen Durchgang (23) hin öffnen, und ausgebildet ist, um mit mindestens einem Kanal (C; C1, C2) gekoppelt zu werden;
einen Gewindering (5), der ausgebildet ist, um durch Aufschrauben mit dem Gewindeabschnitt (3) in Eingriff gebracht zu werden;
wobei der ringförmige Flansch (4) und der Gewindering (5) jeweils ein entsprechendes ringförmiges Dichtungselement (6, 7) umfassen;
wobei die ringförmigen Dichtungselemente (6, 7) an Endflächen des ringförmigen Flanschs (4) und des Gewinderings (5) angeordnet sind, welche in dem Zustand, in dem die Fuge montiert ist, zu einer Wand (P) hin gerichtet sind, die sich zwischen dem ringförmigen Flansch (4) und dem Gewindering (5) befindet und von dem Kanal (C; C1, C2) durchquert wird, wobei die ringförmigen Dichtungselemente (6, 7) aus Carbon-Graphit bestehen, wobei die ringförmigen Dichtungselemente auf diese Art als mehrschichtige Dichtungen hergestellt werden, wobei jede aus Graphitlagen mit einer oder zwei zwischen ihnen angeordneten Schichten aus Stahl besteht.

2. Die Fuge (1) gemäß Anspruch 1, wobei der röhrenförmige Körper (2) und der Gewindering (5) aus austenitischem Edelstahl bestehen.

3. Die Fuge (1) gemäß einem oder mehreren der obigen Ansprüche, wobei der ringförmige Flansch (4) und der Gewindering (5) jeweils einen entsprechenden ringförmigen Sitz (41, 51) für die Aufnahme des jeweiligen ringförmigen Dichtungselements (6, 7) umfassen.

4. Eine Kombination aus einer Fuge (1) gemäß einem oder mehreren der obigen Ansprüche und einem Kanal (C), wobei der Kanal (C) ohne Diskontinuitäten den zentralen Durchgang (23) durchdringt, wobei der Kanal (C) im Wesentlichen an den offenen Anschlüssen (21, 22) mit dem röhrenförmigen Körper (2) gekoppelt ist.

5. Die Kombination gemäß dem obigen Anspruch, wobei der Kanal (C) mit dem röhrenförmigen Körper (2) durch Schweißen verbunden ist.

6. Die Kombination aus einer Fuge (1) gemäß einem oder mehreren der Ansprüche 1 bis 3 und zwei Kanälen (C1, C2), wobei die Kanäle (C1, C2) jeweils mit einem entsprechenden Anschluss des röhrenförmigen Körpers (2) gekoppelt sind.

7. Die Kombination gemäß dem obigen Anspruch, wobei die Kanäle (C1, C2) mit den entsprechenden Anschlüssen des röhrenförmigen Körpers (2) durch Schweißen gekoppelt sind.

## Revendications

1. Jonction étanche (1) pour passage à travers des parois (P) comprenant :
un corps tubulaire (2) qui comprend une partie filetée (3) et une bride annulaire (4), le corps tubulaire (2) comprenant deux embouchures ouvertes (21, 22), qui débouchent sur un canal central (23), et qui sont configurées pour être accouplées à au moins une conduite (C ; C1, C2) ;
une bague filetée (5) qui est configurée pour être engagée par vissage sur ladite partie filetée (3) ;
la bride annulaire (4) et la bague filetée (5) comprenant chacune un élément d'étanchéité annulaire respectif (6, 7) ;
les éléments d'étanchéité annulaires (6, 7) étant placés sur des faces d'extrémité de la bride annulaire (4) et de la bague filetée (5) qui, dans l'état dans lequel la jonction est assemblée, sont orientées vers une paroi (P) qui est placée entre la bride annulaire (4) et la bague filetée (5) et qui est traversée par la conduite (C ; C1, C2), dans lequel les éléments d'étanchéité annulaires (6, 7) sont en graphite, lesdits éléments d'étanchéité annulaires étant ainsi fournis sous forme de joints d'étanchéité multicouches, constitués chacun de feuilles de graphite avec une ou deux couche(s) d'acier placée(s) entre elles.

2. Jonction (1) selon la revendication 1, dans laquelle le corps tubulaire (2) et la bague filetée (5) sont en acier inoxydable austénitique.

3. Jonction (1) selon l'une ou plusieurs des revendications précédentes, dans laquelle la bride annulaire (4) et la bague filetée (5) comprennent chacune un siège annulaire respectif (41, 51) destiné à recevoir l'élément d'étanchéité annulaire respectif (6, 7).

4. Combinaison d'une jonction (1) selon l'une ou plusieurs des revendications précédentes et d'une conduite (C), dans laquelle la conduite (C) passe sans discontinuité dans ledit canal central (23), la conduite (C) étant accouplée au corps tubulaire (2) substantiellement au niveau desdites embouchures ouvertes (21, 22).

5. Combinaison selon la revendication précédente, dans laquelle la conduite (C) est accouplée au corps tubulaire (2) par soudage.

6. Combinaison d'une jonction (1) selon l'une ou plusieurs des revendications 1 à 3 et de deux conduites (C1, C2), lesdites conduites (C1, C2) étant accouplées chacune à une embouchure respective du corps tubulaire (2).

7. Combinaison selon la revendication précédente, dans laquelle lesdites conduites (C1, C2) sont accouplées aux embouchures respectives du corps tubulaire (2) par soudage.
